Europäisches Patentamt

European Patent Office

Office européen des brevets

(11) Veröffentlichungsnummer: **0 398 242**
A2

## (12) EUROPÄISCHE PATENTANMELDUNG

(21) Anmeldenummer: 90109119.9

(22) Anmeldetag: **15.05.90**

(51) Int. Cl.5: **B29B 17/00, B29B 13/10, B29B 13/04**

(30) Priorität: **17.05.89 DE 3915984**

(43) Veröffentlichungstag der Anmeldung:
**22.11.90 Patentblatt 90/47**

(84) Benannte Vertragsstaaten:
**AT BE CH DE DK ES FR GB GR IT LI LU NL SE**

(71) Anmelder: **Decker, Wolfgang**
**Hochwaldstrasse 17**
**D-6601 Kleinblittersdorf 3(DE)**

(72) Erfinder: **Decker, Wolfgang**
**Hochwaldstrasse 17**
**D-6601 Kleinblittersdorf 3(DE)**

(74) Vertreter: **Viêl, Georg, Dipl.-Ing.**
**Am Zimmerplatz 16**
**D-6606 Saarbrücken-Gersweiler(DE)**

(54) **Anlage zum Granulieren von Festkörpern.**

(57) Die Erfindung befaßt sich mit einer Anlage zum Granulieren von Feststoffkörpern, insbesondere von Altreifen.

Die erfindungsgemäße Anlage besteht aus einem Einwurfschacht, zwei hintereinander angeordneten, durch einen Zwischenschacht miteinander verbundenen Kühltunnel, einem Auswurfschacht und einer Zerkleinerungsmaschine, die gemeinsam eine geschlossene Einheit bilden. Die Kühlung der zu granulierenden Feststoffe erfolgt mit Hilfe eines Kühlmittels, das neben den Kühltunnel auch dem Einwurfschacht und der Zerkleinerungsmaschine zugeführt wird.

Die mit der Erfindung erzielten Vorteile bestehen im wesentlichen darin, daß durch die erfindungsgemäße Ausbildung gegenüber bekannten Anlagen eine bessere Kühlung der zu granulierenden Feststoffkörper erreicht und eine höhere Produktion erzielt werden.

Fig.1

EP 0 398 242 A2

## Anlage zum Granulieren von Feststoffkörpern

Die Erfindung betrifft eine Anlage zum Granulieren von Feststoffkörpern, insbesondere Altreifen, bestehend aus einem geneigten, einen schräg aufwärts fördernden Schneckenförderer enthaltenden Kühltunnel, dem zuführseitig ein Einwurfschacht für in Einzelstücke vorzerkleinerte Feststoffkörper zugeordnet ist und der mit Hilfe eines Kühlmittels kühlbar ist und aus einer die vorzerkleinerten, unterkühlten Einzelstücke granulierenden Zerkleinerungsmaschine, in die die Einzelstücke durch einen zwischengeschalteten Auswurfschacht gelangen.

Eine derartige Anlage ist aus der DE-OS 36 32 987 bekannt. Sie weist einen geneigten, mit einem Schneckenförderer ausgestatteten Kühltunel auf. An dem unteren Ende des Kühltunnels ist ein Einwurfschacht und an dem oberen Ende ein Auswurfschacht mit nachgeordneter Zerkleinerungsmaschine angeschlossen. Der Kühltunnel ist als Kühlraum ausgebildet, in dem die in Einzelstücke vorzerkleinerten Altreifen während des Transports auf dem Schneckenförderer auf niedrige, die Sprödigkeit fördernde Temperaturen mit Hilfe eines Kühlmittels gekühlt werden. Die Zufuhr des Kühlmittels erfolgt über Düsen unmittelbar in den Kühltunnel.

Von einem gewissen Nachteil ist bei der bekannten Anlage, daß auf Grund der relativ kurzen Transportzeiten der Einzelstücke durch den als Kühlraum ausgebildeten Kühltunnel nicht immer eine genügende Unterkühlung der Einzelstücke erreicht wird und dadurch Schwierigkeiten beim Granulieren der Einzelstücke auftreten können. Andererseits wird bei abgesenkten Drehzahlen des Schneckenförderers und entsprechend langsamerem Durchlauf der Einzelstücke durch den Kühltunnel die Produktionsleistung der Anlage vermindert, was sich auf die Wirtschaftlichkeit der Anlage nachteilig auswirkt.

Der Erfindung liegt die Aufgabe zugrunde, die Anlage so auszubilden, daß eine bessere Kühlung der zu granulierenden Einzelstücke bei kontinuierlichem Durchlauf erreicht wird, ohne daß der Durchsatz in der Zerkleinerungsmaschine eingeschränkt ist.

Diese Aufgabe wird erfindungsgemäß dadurch gelöst, daß das obere Ende des mit dem Schneckenförderer ausgerüsteten Kühltunnels über einen Zwischenschacht mit dem unteren Ende eines zweiten, geneigten Kühltunnels verbunden ist, in dem ein steuerbarer Kolben hin- und herbewegbar ist und von dessen Innenwand mit Abstand voneinander aufwärts schwenkbare Rückhalteklappen abstehen, und daß am oberen Ende des zweiten Kühltunnels der in die Zerkleinerungsmaschine führende Auswurfschacht angeschlossen ist.

Als vorteilhaft für eine intensive Kühlung hat sich erwiesen, daß der Einwurfschacht, die Kühltunnel und die Zerkleinerungsmaschine mit Kühlmittel kühlbar sind.

Im Rahmen der Erfindung ist vorgesehen, daß das Kühlmittel über Düsen unmittelbar in den Einwurfschacht, die Kühltunnel und die Zerkleinerungsmaschine einbringbar ist.

Eine andere Ausbildung der Erfindung besteht darin, daß der Mantel der Kühltunnel für den Durchfluß eines Kühlmittels doppelwandig ausgebildet ist.

Ein kontinuierlicher Ablauf des Transports der Einzelstücke ist erfindungsgemäß dadurch gegeben, daß der Kolben des zweiten Kühltunnels in Abhängigkeit von der Drehung des Schneckenförderers des ersten Kühltunnels steuerbar ist.

Die mit der Erfindung erzielten Vorteile bestehen insbesondere darin, daß statt der bisher nur in einem einzigen Kühltunnel stattfindenden Kühlung der Einzelstücke bereits im Einwurfschacht eine Vorkühlung erfolgt, die Kühlstrecke durch den erfindungsgemäßen zweiten Kühltunnel verlängert wird, und daß auch die Zerkleinerungsmaschine an die Kühlung angeschlossen ist, was insgesamt zu einer wesentlich besseren Unterkühlung der Einzelstücke führt, das Granulieren erleichtert und dadurch der Durchsatz durch die Anlage gesteigert werden kann.

Ein Ausführungsbeispiel der Erfindung ist in den Zeichnungen dargestellt und wird nachfolgend näher beschrieben.

Es zeigen

Fig. 1 die Ansicht der Anlage, teilweise geschnitten,

Fig. 2 einen Schnitt durch die Zerkleinerungsmaschine und

Fig. 3 die Ansicht "A" aus Fig. 2.

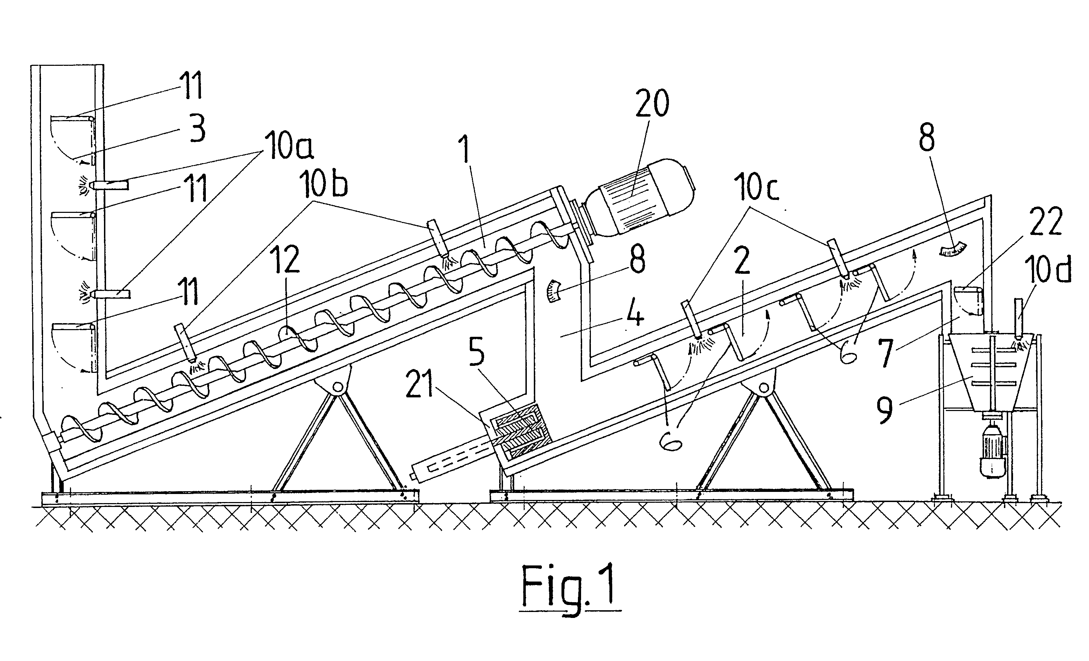

Die Anlage zum Granulieren von Feststoffkörpern, insbesondere Altreifen, aber auch von anderen Stoffen, wie beispielsweise Hausmülle, besteht gemäß Fig. 1 aus einem Einwurfschacht 3, einem Kühltunnel 1 mit Schneckenförderer, einem Zwischenschacht 4, einem zweiten Kühltunnel 2 mit steuerbarem Kolben 5 und aufwärts schwenkbaren Rückhalteklappen 6, einem Auswurfschacht 7 und einer Zerkleinerungsmaschine 9, die in dieser Reihenfolge miteinander verbunden sind und eine geschlossene Einheit bilden.

Die Kühltunnel 1, 2 sind geneigt, wobei an das untere Ende des ersten Kühltunnels 1 der Einwurfschacht 3 angeschlossen ist, und das obere Ende über den Zwischenschacht 4 mit dem unteren Ende des zweiten Kühltunnels 2 verbunden ist; an dessen oberen Ende ist der Auswurfschacht 7 angeschlossen, der wiederum die Verbindung zu der Zerkleinerungsmaschine 9 herstellt.

Zur Erzielung einer intensiveren Kühlung werden, im Gegensatz zu der in der DE-OS 36 32 987 beschriebenen Anlage, die in Einzelstücke 8 vorzerkleinerten, dem Einwurfschacht 3 beispielsweise über ein Transportband zugeführten Feststoffkörper bereits in dem Einwurfschacht 3 einer Vorkühlung unterworfen. Das Kühlmittel gelangt über seitlich angebrachte Düsen 10a in den Einwurfschacht 3, der ein aus der DE-OS 36 32 987 bekanntes Schleusensystem aufweist, das aus abwärts schwenkbaren, in Abhängigkeit von der Drehung des Schneckenförderers 12 sich nacheinander öffnenden und schließenden Klappen 11 besteht und die Einzelstücke 8 an den Schneckenförderer 12 abgibt.

Die weitere Abkühlung der zu granulierenden Einzelstücke 8 auf eine die Sprödigkeit fördernde Tieftemperatur erfolgt während des Transports durch die hintereinander angeordneten, über den Zwischenschacht 4 miteinander verbundenen Kühltunnel 1, 2. Durch die erfindungsgemäße Anordnung eines zweiten Kühltunnels 2 hinter dem Kühltunnel 1 wird die nutzbare Kühlstrecke verlängert und eine bessere Unterkühlung der Einzelstücke 8 bei gleicher Durchlaufgeschwindigkeit erzielt.

Das Kühlmittel wird über Düsen 10b, 10c in die Kühltunnel 1, 2 eingeleitet. Es ist aber auch möglich, die Abkühlung der Einzelstücke 8 über Konvektion zu erreichen. Zu diesem Zweck ist der Mantel der Kühltunnel 1, 2 doppelwandig ausgebildet und der so gebildete Zwischenraum mit Kühlmittel gefüllt.

Der Transport der Einzelstücke 8 durch den ersten Kühltunnel 1 erfolgt in bekannter Weise über einen schräg aufwärts fördernden, durch den Motor 20 angetriebenen Schneckenförderer 12. Für den Transport der unterkühlten Einzelstücke 8 durch den zweiten Kühltunnel 2 ist dagegen ein an der unteren Stirnwand 21 angeordneter, in Richtung der Tunnelachse hin- und herschiebbarer Kolben 5 vorgesehen, der die durch den Zwischenschacht 4 in den Kühltunnel 2 fallenden Einzelstücke 8 schräg nach oben schiebt.

In Ausgangsstellung befindet sich der Kolben 5, wie in Fig. 1 dargestellt, an der unteren Stirnwand 21, so daß der Anschluß des Zwischenschachtes 4 frei und der Kühltunnel 2 aufnahmebereit ist. Ein von dem Schneckenförderer 12 abgegebenes, unterkühltes Einzelstück 8 durchfällt den Zwischenschacht 4 und gelangt vor den Kolben 5. Der Kolben 5, dessen Hubbewegung in Abhängigkeit von der Drehung des Schneckenförderers 12 gesteuert wird, schiebt das Einzelstück 8 durch die erste, aufwärts schwenkbare Rückhalteklappe 6 und bewegt sich nach erfolgter Übergabe wieder in seine Ausgangsstellung zurück. Dabei gibt er den Anschluß des Zwischenschachtes 4 für das nächste Einzelstück 8 frei, so daß ein neuer Arbeitstakt beginnen kann.

Die über die Länge des Kühltunnels 2 in Abständen angeordneten Rückhalteklappen 6 werden nacheinander von den im Schiebeverband aufwärts bewegten Einzelstücken 8 nach oben geschwenkt und verhindern ein Zurückgleiten der Einzelstücke 8 während des Zurückfahrens des Kolbens 5.

Die Steuerung des Kolbens 5 in Abhängigkeit von der Drehung des Schneckenförderers 12, sowie das zeitweise Verschließen des Zwischenschachts 4 durch den Kolben 5 garantieren eine störungsfreie Übergabe der Einzelstücke 8 vom ersten an den zweiten Kühltunnel 2 sowie einen kontinuierlichen Transport der Einzelstücke 8 durch die hintereinander geschalteten Kühltunnel 1, 2.

Auf einen Schneckenförderer 12 wurde im Kühltunnel 2 wegen der Schwierigkeiten bei der Synchronisation und der aufwendigeren und teueren Konstruktion verzichtet. Andererseits läßt sich das Schiebesystem des Kühltunnels 2 nicht in dem Kühltunnel 1 einsetzen, da die Einzelstücke 8, besonders am Anfang des Kühltunnels 1, noch nicht ausreichend unterkühlt sind und die noch teilweise elastischen Einzelstücke 8 sich in den Rückhalteklappen 6 verklemmen könnten.

Nach Erreichen des oberen Endes des Kühltunnels 2 fallen die unterkühlten Einzelstücke 8 durch den Auswurfschacht 7 in die Zerkleinerungsmaschine 9. Wie aus der DE-OS 36 32 987 bekannt, können zur Steigerung der Produktion auch zwei, über eine steuerbare Klappe 22 wechselseitig beschickbare Zerkleinerungsmaschinen 9 an den Auswurfschacht 7 angeschlossen werden.

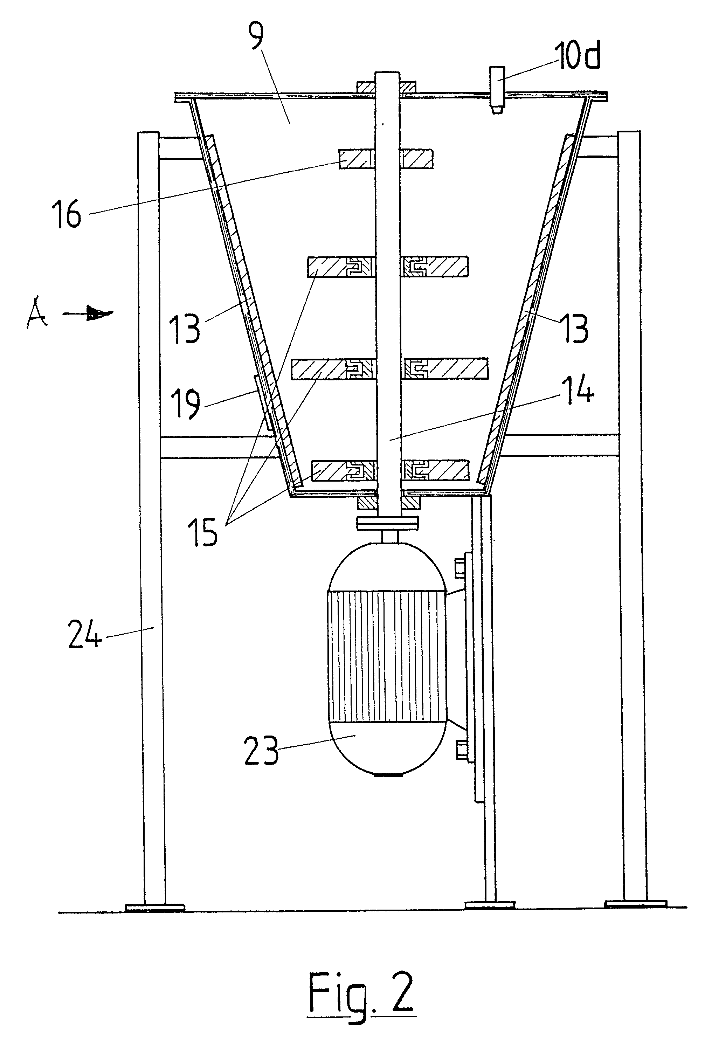

Die Zerkleinerungsmaschine 9 ist, wie aus der Schnittdarstellung in Fig. 2 hervorgeht, trichterförmig ausgebildet und auf einem Tragerahmen 24 angeordnet. Die Zerkleinerungsmaschine 9 weist auf einer zentralen, senkrecht angeordneten, durch einen Motor 23 angetriebenen Welle 14 mehrere im Abstand voneinander angeordnete Schlegel 15 auf, durch deren Drehbewegung die unterkühlten Einzelstücke 8 zertrümmert und granuliert werden. Vorteilhaft wirken sich dabei an der Innenwand der Zerkleinerungsmaschine 9 von oben nach unten sich erstreckende Prallleisten 13 aus, gegen die die Feststoffkörper geschleudert werden und die ein Mitdrehen der Feststoffe weitgehend verhindern.

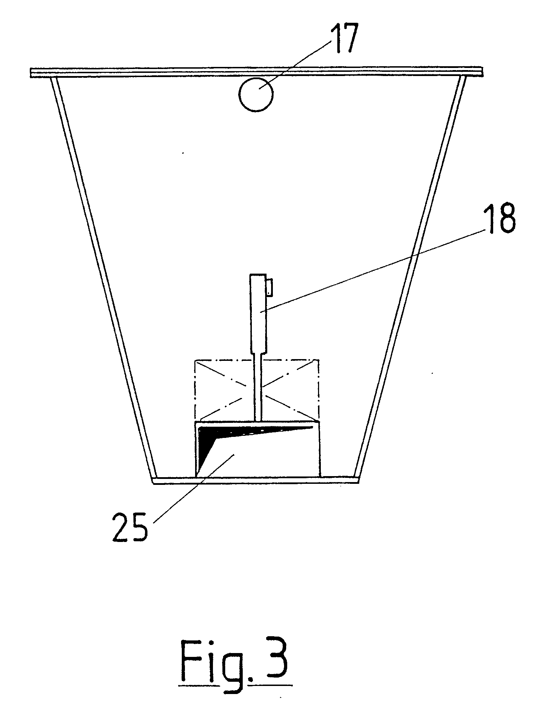

Ferner ist im oberen Bereich auf der Welle 14 ein Ansaugventilator 16 angeordnet, mit dessen Hilfe die leichteren Gewebeteilchen aus dem Innern abgesaugt und durch die zugeordnete, in der Ansicht "A" in Fig. 3 dargestellte Austrittsöffnung 17 nach außen abgeführt werden.

Zur Entnahme des Granulats und gegebenenfalls des Drahtgewebes hat die Zerkleinerungsmaschine 9 eine Eingriffsöffnung 25 für einen, beispielsweise über ein Magnetventil 18, steuerbaren Schieber 19.

Um die Kühlwirkung auch in der Zerkleinerungsmaschine 9 aufrechtzuerhalten, ist auch die Zerkleinerungsmaschine 9 an die Kühlmittelversorgung angeschlossen, wobei das Kühlmittel über Düsen 10d zugeführt wird.

**Ansprüche**

1. Anlage zum Granulieren von Feststoffkörpern, insbesondere Altreifen, bestehend aus einem geneigten, einen schräg aufwärts fördernden Schneckenförderer enthaltenden Kühltunnel, dem zuführseitig ein Einwurfschacht für in Einzelstücke vorzerkleinerte Feststoffkörper zugeordnet ist und der mit Hilfe eines Kühlmittels kühlbar ist und aus einer die vorzerkleinerten, unterkühlten Einzelstücke granulierenden Zerkleinerungsmaschine, in die die Einzelstücke durch einen zwischengeschalteten Auswurfschacht gelangen, dadurch **gekennzeichnet,** daß das obere Ende des mit dem Schneckenförderer (12) ausgerüsteten Kühltunnels (1) über einen Zwischenschacht (4) mit dem unteren Ende eines zweiten, geneigten Kühltunnels (2) verbunden ist, in dem ein steuerbarer Kolben (5) hin- und herbewegbar ist und von dessen Innenwand mit Abstand voneinander aufwärts schwenkbare Rückhalteklappen (6) abstehen, und daß am oberen Ende des zweiten Kühltunnels (2) der in die Zerkleinerungsmaschine (9) führende Auswurfschacht (7) angeschlossen ist.

2. Anlage nach Anspruch 1, dadurch **gekennzeichnet,** daß der Einwurfschacht (3), die Kühltunnel (1, 2) und die Zerkleinerungsmaschine (9) mit Kühlmittel kühlbar sind.

3. Anlage nach Anspruch 1 oder 2, dadurch **gekennzeichnet,** daß das Kühlmittel über Düsen (10a, 10b, 10c, 10d) unmittelbar in den Einwurfschacht (3), die Kühltunnel (1, 2) und die Zerkleinerungsmaschine (9) einbringbar ist.

4. Anlage nach Anspruch 1 oder 2, dadurch **gekennzeichnet,** daß der Mantel der Kühltunnel (1, 2) für den Durchfluß eines Kühlmittels doppelwandig ausgebildet ist.

5. Anlage nach einem der vorhergehenden Ansprüche, dadurch **gekennzeichnet,** daß der Kolben (5) des zweiten Kühltunnels (2) in Abhängigkeit von der Drehung des Schneckenförderers (12) des ersten Kühltunnels (1) steuerbar ist.

Fig.1

Fig. 2

Fig.3